# EUROPEAN PATENT APPLICATION

(11) **EP 4 641 656 A1**
(43) Date of publication of application: **29.10.2025**
(21) Application number: 25171714.6
(22) Date of filing: 22.04.2025
(51) Int. Cl.: H01M 4/131, H01M 4/136, H01M 4/36, H01M 4/505, H01M 4/525, H01M 4/58, H01M 4/62, H01M 10/0525, H01M 4/02, C01G 45/22, C01G 49/00, C01G 53/50

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(30) Priority: 26.04.2024 KR 20240056138
(71) Applicant: SAMSUNG SDI CO., LTD., Yongin-si, Gyeonggi-do 17084 (KR)
(72) Inventor: KIM, Sangmi, 17084 Yongin-si (KR); LEE, Soonrewl, 17084 Yongin-si (KR); KIM, Young-Ki, 17084 Yongin-si (KR); CHOI, Aram, 17084 Yongin-si (KR); DOO, Sungwook, 17084 Yongin-si (KR); KANG, Gwiwoon, 17084 Yongin-si (KR)
(74) Representative: Marks & Clerk LLP

(57) **Abstract**

Disclosed are positive electrode active materials for a rechargeable battery, positive electrodes including the same, and rechargeable lithium batteries including the same. For example, the positive electrode active material includes first particles including a compound of Chemical Formula 1 and having a first average particle diameter, and second particles including a compound of Chemical Formula 2 and having a second average particle diameter that is greater than the first average particle diameter. The content of the first particles is greater than or equal to the content of the second particles.

## Description

### BACKGROUND

### 1. Field

Embodiments of the present disclosure herein relate to a positive electrode active material for a rechargeable lithium battery, a positive electrode including the same, and a rechargeable lithium battery including the same, for example, to a positive electrode active material including an olivine-based lithium compound, a positive electrode including the same, and a rechargeable lithium battery including the same.

### 2. Description of the Related Art

Recently, with the rapid spread of electronic devices that use batteries, such as mobile phones, laptop computers, and electric vehicles, the demand for rechargeable batteries having high energy density and high capacity is rapidly increasing. Accordingly, research and development to improve the performance of rechargeable lithium batteries is being actively conducted.

A rechargeable lithium battery is a battery including a positive electrode and a negative electrode including active materials capable of intercalation and deintercalation of lithium ions, and an electrolyte, and produces electrical energy through the oxidation and reduction reactions if lithium ions are intercalated into and deintercalated from the positive electrode and negative electrode.

### SUMMARY

Embodiments of the present disclosure provide a positive electrode active material having high energy density, a high operating voltage and high conductivity (e.g., high electrical conductivity).

Embodiments of the present disclosure also provide a rechargeable lithium battery having high energy density, a high operating voltage and high low-temperature properties (e.g., desirable low-temperature properties).

According to an embodiment of the present disclosure, a positive electrode active material includes first particles including a compound of Chemical Formula 1 and having a first average particle diameter, and second particles including a compound of Chemical Formula 2 and having a second average particle diameter that is greater than the first average particle diameter. The content of the first particles is greater than or equal to the content of the second particles.

Chemical Formula 1 Liₐ₁Mnₓ₁Fe_{y1}B_{z1}PO_{4-b1}

In Chemical Formula 1, 0.8≤a1≤1.2, 0.5≤x1≤0.7, 0.3≤y1≤0.5, 0<z1≤0.1, 0≤b1≤0.05, and x1 + y1 + z1 = 1 is satisfied.

B is at least one element selected from the group consisting of Al, Ti, V, Mg and Nb.

Chemical Formula 2 Liₐ₂Niₓ₂Co_{y2}Mn_{z2}X_{c2}O_{2-b2}

In Chemical Formula 2, 0.8≤a2≤1.2, 0.5≤x2≤0.8, 0≤y2≤0.3, 0.1≤z2≤0.5 0≤c2≤0.05, 0<b2≤0.05, and x2 + y2 + z2 + c2 = 1 is satisfied.

X is at least one element selected from the group consisting of Al, Ti, Mg, Zr, Mo and Nb.

According to an embodiment of the present disclosure, a positive electrode for a rechargeable lithium battery includes a positive electrode current collector, and a positive electrode active material layer on the positive electrode current collector. The positive electrode active material layer includes the positive electrode active material, a conductive material (e.g., an electrically conductive material) and a binder.

According to an embodiment of the present disclosure, a rechargeable lithium battery includes the positive electrode, a negative electrode including a negative electrode current collector and a negative electrode active material layer on the negative electrode current collector, and a separator between the positive electrode and the negative electrode.

At least some of the above and other features of the invention are set out in the claims.

### BRIEF DESCRIPTION OF THE DRAWINGS

The accompanying drawings are included to provide a further understanding of the subject matter of the present disclosure, and are incorporated in and constitute a part of this specification. The drawings illustrate embodiments of the present disclosure and, together with the description, serve to explain principles of the present disclosure.
FIG. 1 is a simplified conceptual diagram showing a rechargeable lithium battery according to some embodiments of the present disclosure.
FIGS. 2-5 are simplified diagrams showing rechargeable lithium batteries according to embodiments, where FIG. 2 is a cylindrical battery, FIG. 3 is a prismatic battery, and FIGS. 4-5 are pouch-type batteries.
FIG. 6 is an enlarged view showing a positive electrode active material layer of a rechargeable lithium battery according to some embodiments of the present disclosure.
FIG. 7A is a scanning electron microscope (SEM) image showing a positive electrode active material of Example 1 of the present disclosure.
FIG. 7B is a scanning electron microscope (SEM) image showing a positive electrode active material of Example 2 of the present disclosure.
FIG. 8 is a graph showing voltage-capacity properties for rechargeable lithium batteries according to some embodiments of the present disclosure.
FIGS. 9A-9B are graphs showing differential capacity for rechargeable lithium batteries according to some embodiments of the present disclosure.
FIG. 10 is a graph showing differential capacity for a rechargeable lithium battery according to Example 3-3 of FIG. 9B.

### DETAILED DESCRIPTION

In order to sufficiently understand the configuration and effect of the subject matter of the present disclosure, some embodiments of the present disclosure will be described with reference to the accompanying drawings. It should be noted, however, that the present disclosure is not limited to the following example embodiments, and may be implemented in various suitable forms. Rather, the example embodiments are provided only to disclose the subject matter of the present disclosure and let those skilled in the art fully know the scope of the present disclosure.

In this description, it will be understood that, if an element is referred to as being on another element, the element can be directly on the other element or intervening elements may be present between therebetween. In the drawings, thicknesses of some components may be exaggerated to effectively explain technical contents of the present disclosure. Like reference numerals refer to like elements throughout the specification.

Unless otherwise specially noted in this description, the expression of a singular form may include the expression of a plural form. In embodiments, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, and/or a reaction product.

Unless otherwise specially defined in this description, a particle diameter may be an average particle diameter. In embodiments, a particle diameter means an average particle diameter (D50), which refers to the diameter of particles at a cumulative volume of about 50 vol% in particle size distribution. The average particle diameter (D50) may be measured by any suitable method generally used in the art, for example, by a particle size analyzer, and/or by using a transmission electron microscope (TEM) image and/or a scanning electron microscope (SEM) image. In embodiments, the average particle diameter may be measured by a measurement device using dynamic light-scattering, wherein data analysis is conducted to count the number of particles for each particle size range, and an average particle diameter (D50) value may then be obtained through calculation. In embodiments, a laser scattering method may be utilized to measure the average particle diameter. In the laser scattering method, target particles are dispersed in a dispersion medium, then, introduced into a commercial laser diffraction particle-diameter measurement instrument (e.g., MT3000 of Microtrac), and irradiated to ultrasonic waves of about 28 kHz at an output of about 60 W, and the average particle diameter (D50) based on about 50% of particle diameter distribution may be calculated in the measurement instrument.

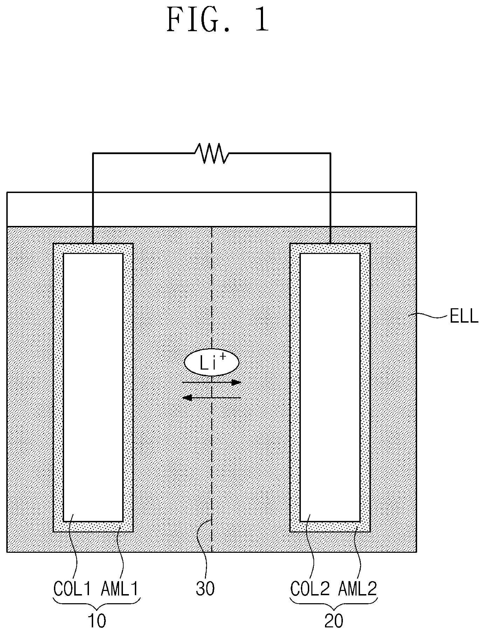

FIG. 1 is a simplified conceptual diagram of a rechargeable lithium battery according to some embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be immersed in the electrolyte solution ELL.

The electrolyte solution ELL may be a medium that transmits lithium ions between the positive electrode 10 and the negative electrode 20. In the electrolyte solution ELL, the lithium ions may move through the separator 30 toward the positive electrode 10 or the negative electrode 20.

### Positive Electrode 10

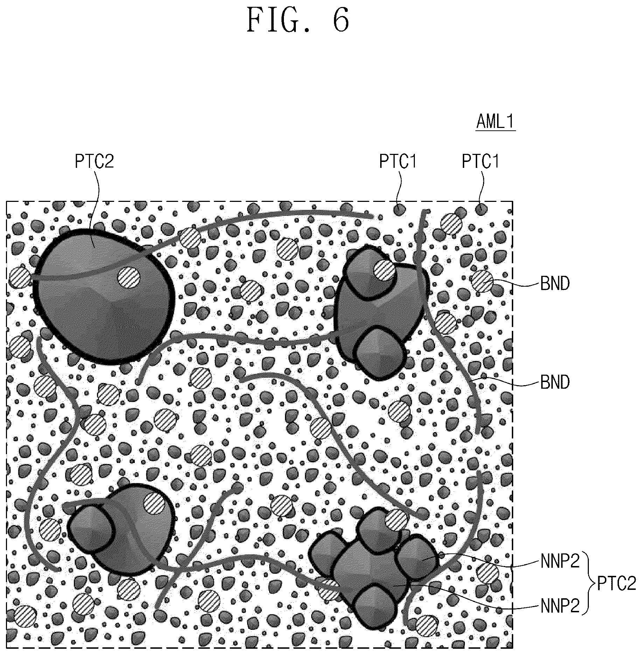

The positive electrode 10 for a rechargeable lithium battery includes a current collector COL1 and a positive electrode active material layer AML1 on the current collector COL1. The positive electrode active material layer AML1 includes a positive electrode active material and further includes a binder and a conductive material (e.g., an electrically conductive material). A further detailed description of the positive electrode active material layer AML1 according to some embodiments of the present disclosure will be further explained with reference to FIG. 6. Al may be used as the current collector COL1, but is not limited thereto.

### Negative Electrode 20

The negative electrode 20 for a rechargeable lithium battery may include a current collector COL2, and a negative electrode active material layer AML2 on the current collector COL2. The negative electrode active material layer AML2 may include a negative electrode active material and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, a cellulose-based compound capable of imparting or increasing viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material that is capable of being fibrous (e.g., capable of being fiberized). For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity to the electrode. Any suitable material that does not cause chemical change (e.g., an undesirable chemical change in the rechargeable lithium battery) and is an electron conductive material may be used in the battery. Examples of the conductive material may include: a carbon-based material such as natural graphite, artificial graphite, carbon black, acetylene black, Ketjen black, a carbon fiber, a carbon nanofiber, and/or carbon nanotube; a metal-based material including copper, nickel, aluminium, silver, etc., in a form of a metal powder and/or a metal fiber; a conductive polymer (e.g., an electrically conductive polymer) such as a polyphenylene derivative; or a mixture thereof.

The current collector COL2 may use a copper foil, a nickel foil, a stainless steel foil, a titanium foil, a nickel foam, a copper foam, a polymer substrate coated with a conductive metal (e.g., an electrically conductive metal), or a combination thereof.

### Negative Electrode Active Material

The negative electrode active material in the negative electrode active material layer AML2 may include a material that reversibly intercalates/deintercalates lithium ions, a lithium metal, a lithium metal alloy, a material capable of doping into and de-doping from lithium, and/or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as non-shaped, sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping into and de-doping from lithium may be a Si-based negative electrode active material and/or a Sn-based negative electrode active material. The Si-based negative electrode active material may include silicon, a silicon-carbon composite, SiOx (0 < x < 2), a Si-Q alloy (where Q is selected from an alkali metal, an alkaline earth metal, a Group 13 element, a Group 14 element (except for Si), a Group 15 element, a Group 16 element, a transition metal, a rare-earth element, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core), in which primary silicon particles are assembled, and an amorphous carbon first coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon first coating layer on a surface of the core.

The Si-based negative electrode active material and/or the Sn-based negative electrode active material may be used in combination with a carbon-based negative electrode active material.

### Separator 30

Depending on the type (or kind) of the rechargeable lithium battery, the separator 30 may be between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a first coating layer including an organic material, an inorganic material, or a combination thereof on one or both surfaces (e.g., two opposing surfaces) of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed together in one first coating layer, or a first coating layer including an organic material and a first coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium that transmits ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In embodiments, if using a carbonate-based solvent, a cyclic carbonate and a chain carbonate may be mixed together and used, and the cyclic carbonate and the chain carbonate may be mixed together in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

### Rechargeable Lithium Battery

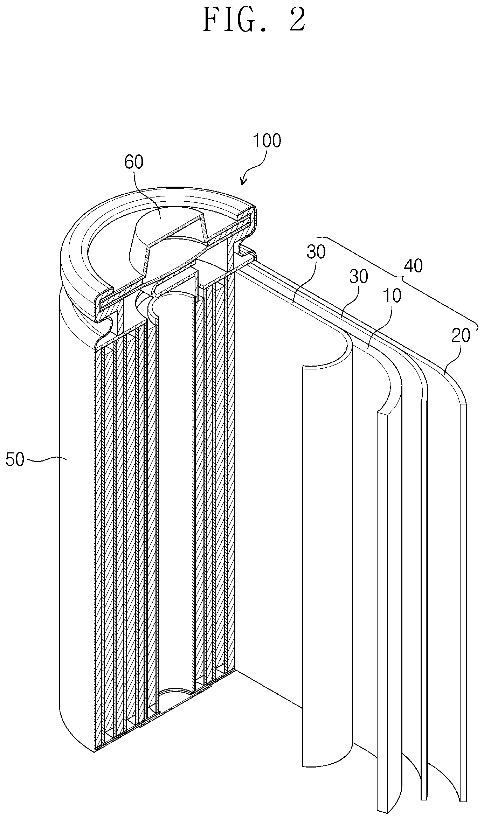

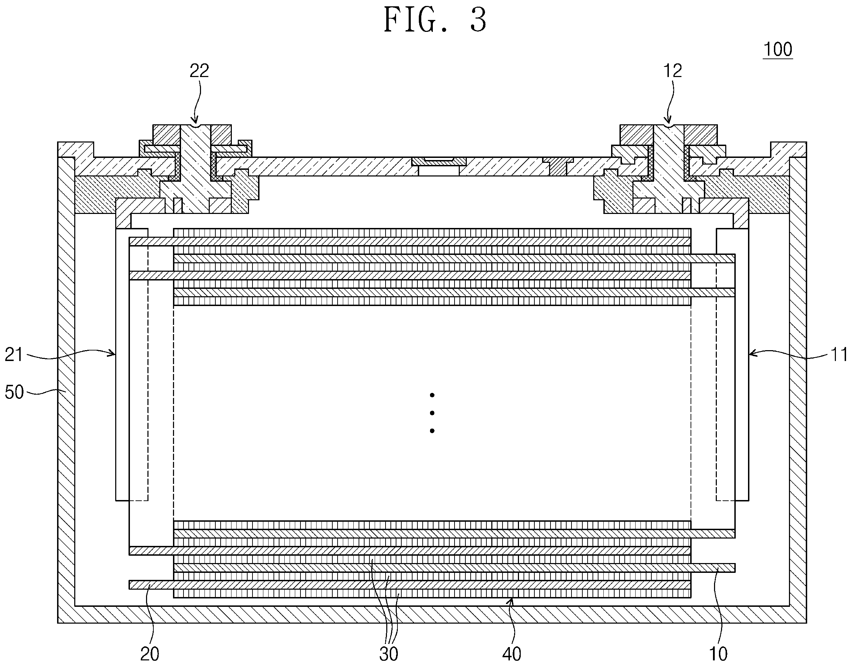

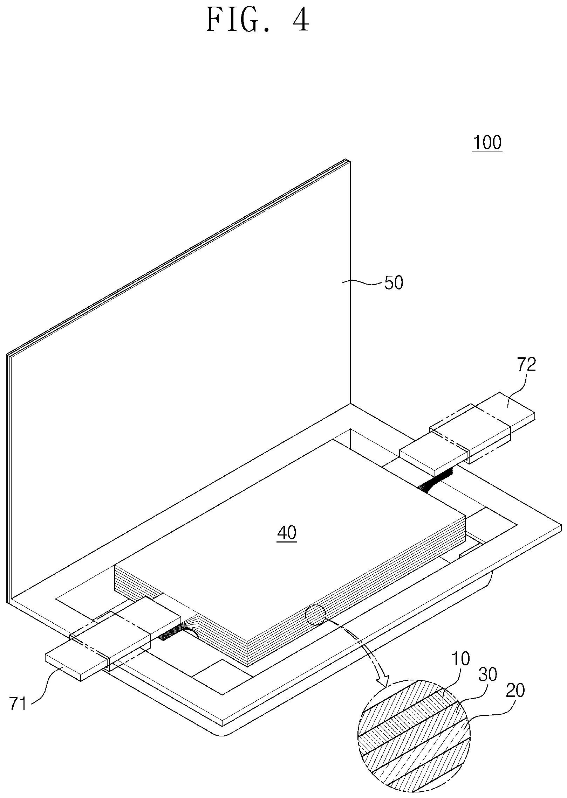

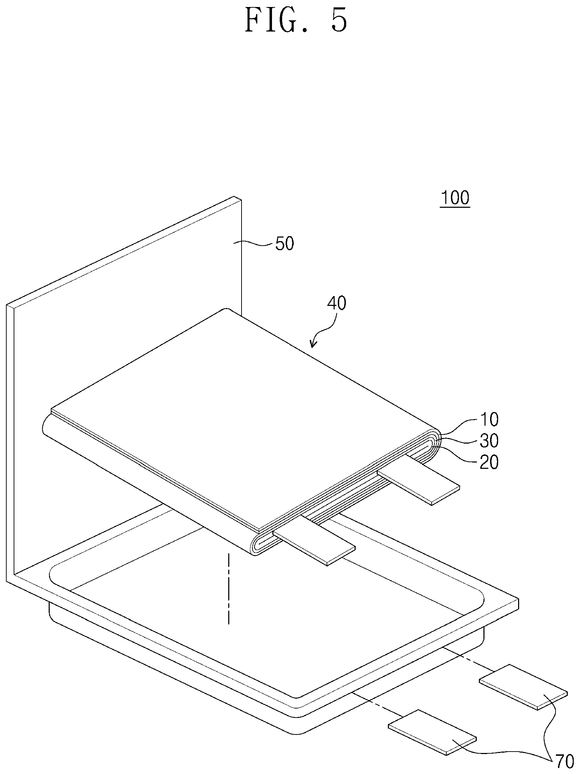

The rechargeable lithium battery may be classified into cylindrical, prismatic, pouch, or coin-type batteries, and/or the like depending on their shape. FIGS. 2-5 are schematic views illustrating a rechargeable lithium battery according to an embodiment. FIG. 2 shows a cylindrical battery, FIG. 3 shows a prismatic battery, and FIGS. 4-5 show pouch-type batteries. Referring to FIGS. 2-5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 that seals the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4-5, the rechargeable lithium battery 100 may include an electrode tab 70 (FIG. 5), which may be, for example, a positive electrode tab 71 and a negative electrode tab 72 (FIG. 4) that serves as an electrical path for inducing the current formed in the electrode assembly 40 to the outside.

The rechargeable lithium battery according to an embodiment may be applied to automobiles, mobile phones, and/or various suitable types (or kinds) of electric devices, as non-limiting examples.

FIG. 6 illustrates an enlarged view showing a positive electrode active material layer of a rechargeable lithium battery according to some embodiments of the present disclosure. Referring to FIG. 6, as discussed above, the positive electrode active material layer AML1 (see FIG. 1) includes a first particle PTC1, a second particle PTC2, a conductive material CDM (e.g., an electrically conductive material CDM), and a binder BND. A plurality of the first particles PTC1 and a plurality of the second particles PTC2 may constitute a positive electrode active material according to some embodiments of the present disclosure.

The positive electrode active material layer AML1 may further include an additive that may serve as a sacrificial positive electrode.

The content of the positive electrode active material (PTC1 and PTC2) in the positive electrode active material layer AML1 may range from about 90 wt% to about 99.5 wt% or about 90 wt% to about 99 wt% relative to about 100 wt% of the positive electrode active material layer AML1. Each of the contents of the binder BND and the conductive material CDM may be about 0.5 wt% to about 5 wt% relative to about 100 wt% of the positive electrode active material layer AML1.

The binder BND may combine (e.g., adhere together) the first particles PTC1, the second particles PTC2, and the conductive material CDM with each other. For example, the binder BND may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the present disclosure is not limited thereto.

The conductive material CDM may be used to improve conductivity (e.g., electrical conductivity) of the positive electrode active material layer AML1. Any suitable conductive material (e.g., any suitable electrically conductive material) that does not cause a chemical change (e.g., that does not cause an undesirable chemical change) of the positive electrode active material layer AML1 may be used without limitation as the conductive material CDM. For example, the conductive material CDM may include: a carbon-based material such as natural graphite, artificial graphite, carbon black, acetylene black, Ketjen black, carbon fiber, carbon nano-fiber, and/or carbon nano-tube; a metal-based material containing copper, nickel, aluminium, silver and/or the like and/or having a metal powder and/or metal fiber form; a conductive polymer (e.g., an electrically conductive polymer) such as a polyphenylene derivative; or a mixture thereof.

Hereinafter, each of the first particle PTC1 and the second particle PTC2 will be explained in more detail.

### First Particle PTC1

In some embodiments, the first particle PTC1 may have a single particle form. In the description, the term single particle may mean a sole particle that does not have a grain boundary inside. The single particle may have a morphology phase (e.g., a single morphology phase), and may mean a single particle, a monolith structure, a monolithic structure, or a non-agglomerated particle in which the particles exist as an independent phase that are not agglomerated. For example, the single particle may be a single crystal. In embodiments, the single particle may be a particle containing several crystals. The single particle may be a solely separated form. In embodiments, the single particle may be in the form of 2 to 100 single particles attached to each other.

In some embodiments, the first particle PTC1 may be a positive electrode active material of a nano type (e.g., may have a nanometer size). The first particle PTC1 may include at least one first primary particle. In an embodiment, the first primary particles may agglomerate to have a particle form close to a spherical shape (e.g., a generally spherical shape). The first particle PTC1 may not have a spherical shape though the first primary particles agglomerate. For example, the first particle PTC1 may have a random form (e.g., may have an amorphous shape).

The first particles PTC1 may be provided in various suitable sizes. For example, the average particle diameter of the first particles PTC1 may be about 100 nm to about 2.5 µm, or about 1.1 µm. The minimum particle diameter of the first particles PTC1, e.g., the particle diameter of the first primary particles may be about 100 nm to about 500 nm, or about 100 nm to about 200 nm.

In an embodiment, the average particle diameter may be measured by a particle size analyzer. The average particle diameter may mean the diameter of particles at an accumulated volume of about 50 vol% (D50) in a particle size distribution.

In an embodiment, the minimum particle diameter, for example, the diameter of the first primary particles may mean the diameter measured by randomly selecting about 30 first primary particles on an electron microscope image of the first particles PTC1.

The porosity of the first particles PTC1 may be greater than about 40%. The span value of the first particles PTC1, analyzed by a particle size analyzer may be deviated from (e.g. outside) a range from about 0.3 to about 0.75. Porosity·(n) may·be-defined as the pore volume (Vₚ) divided by·the total volume·(Vₜ) of a particle, or n=Vₚ/Vₜ. The span value is represented by (D₉₀-D₁₀)/D₅₀. The term "D_{10,}" as used herein, refers to the average particle diameter of particles when the cumulative percentage reaches 10% by volume in the particle size distribution, and the term "D_{90,}" as used herein, refers to the average particle diameter of particles when the cumulative percentage reaches 90% by volume in the particle size distribution.

In an embodiment, the first particle PTC1 may include a first coating layer comprising carbon element on the surface thereof. The first coating layer may cover the entire surface of the first particle PTC1 or may cover a portion of the surface of the first particle PTC1. For example, the first coating layer may include carbon and/or a carbon-containing compound. The first coating layer may further include at least one metal-containing compound selected from the group consisting of a titanium-containing compound, a magnesium-containing compound and a vanadium-containing compound. The metal-containing compound such as the titanium-containing compound, the magnesium-containing compound and the vanadium-containing compound may be, for example, a metal oxide, a metal hydroxide, a metal carbonate, a synthesized compound thereof or a mixture thereof. The metal-containing compound may further include other metal and/or non-metal elements. For example, the metal-containing compound may further include lithium. The first particle PTC1 may show improved structural stability and improved electrical conductivity due to the first coating layer.

The first particle PTC1 may include an olivine-based lithium compound represented by Chemical Formula 1 below.

Chemical Formula 1 Liₐ₁Mnₓ₁Fe_{y1}Bz₁PO_{4-b1}

In Chemical Formula 1, 0.8≤a1≤1.2, 0.5≤x1≤0.7, 0.3≤y1≤0.5, 0<z1≤0.1, 0≤b1≤0.05, and x1 + y1 + z1 = 1 is satisfied. B is at least one element selected from the group consisting of Al, Ti, V, Mg and Nb. B may be a dopant doped in the first particle PTC1. For example, B may include Ti.

The first particle PTC1 may further include carbon derived from the first coating layer. The carbon element content in the first particle PTC1 may be about 0.5 wt% to about 5 wt%, about 0.5 wt% to about 3 wt%, about 0.5 wt% to about 2 wt%, or about 1.5 wt% to about 2.5 wt%.

### Second Particle PTC2

In some embodiments, the second particle PTC2 may have a single particle form. In the description, the term single particle may mean a sole particle that does not have a grain boundary inside. The single particle may have a morphology phase (e.g., a single morphology phase), and may mean a single particle, a monolith structure, a monolithic structure, or a non-agglomerated particle in which the particles exist as an independent phase that are not agglomerated. For example, the single particle may be a single crystal. In embodiments, the single particle may be a particle including several crystals. The single particle may be a solely separated form. In embodiments, the single particle may be in the form of 2 to 100 single particles attached to each other.

In some embodiments, the second particle PTC2 may be a positive electrode active material of a micro type (e.g., may have a micrometer size). The second particle PTC2 may include at least one second primary particle NNP2. In an embodiment, the second primary particles NNP2 may agglomerate to have a particle form close to a spherical shape (e.g., a generally spherical shape). The second particle PTC2 may not have a spherical shape though the second primary particles NNP2 agglomerate. For example, the second particle PTC2 may have a random form (e.g., may have an amorphous shape).

The second particles PTC2 may be provided in various suitable sizes. For example, the average particle diameter of the second particles PTC2 may be about 2 µm to about 5 µm, or about 3.5 µm. The minimum particle diameter of the second particles PTC2, e.g., the diameter of the second primary particles may be about 100 nm to about 500 nm, or about 100 nm to about 200 nm.

In an embodiment, the average particle diameter may be measured by a particle size analyzer. The average particle diameter may mean the diameter of particles at an accumulated volume of about 50 vol% (D50) in a particle size distribution.

In an embodiment, the minimum particle diameter, for example, the diameter of the second primary particles may mean the diameter measured by randomly selecting about 30 second primary particles on an electron microscope image of the second particles PTC2. In an embodiment, the particle diameter of the second primary particles may be greater than the particle diameter of the first primary particles. In another embodiment, the particle diameter of the second primary particles may be substantially the same as the particle diameter of the first primary particles. A difference between the particle diameter of the second primary particles and the particle diameter of the first primary particles may be about 100 nm or less.

The porosity of the second particles PTC2 may be greater than about 40%. The span value of the second particles PTC2, analyzed by a particle size analyzer may be deviated from (e.g. outside) a range of about 0.3 to about 0.75.

In an embodiment, the second particle PTC2 may include a second coating layer on the surface thereof. By including the second coating layer, the second particles PTC2 may effectively suppress or reduce structural collapse due to repeated charging and discharging. Accordingly, the lifetime characteristics of a rechargeable battery may be improved.

The second coating layer may include a boron-containing compound, an aluminium-containing compound or a combination thereof. The metal-containing compound in the second coating layer may be, for example, a metal oxide, a metal hydroxide, a metal carbonate, a synthesized compound thereof or a mixture thereof. The metal-containing compound may further include other metal and/or non-metal elements. For example, the second coating layer may further include lithium, manganese, and/or nickel.

A method for measuring the metal content in the second coating layer of the second particle PTC2 may include performing scanning electron microscopy-energy dispersive X-ray spectroscopy (SEM-EDS) on the second particles PTC2. Through the analysis, the contents of boron and/or aluminium in the second coating layer may be confirmed. As a method for measuring the metal content in the second coating layer, an inductively coupled plasma-mass spectrometry (ICP-MS), an inductively coupled plasma optical emission spectroscopy (ICP-OES) and/or the like may be used in addition to the SEM-EDS.

The second particle PTC2 includes a lithium nickel-based composite oxide as a nickel-based active material. In an embodiment, the second particle PTC2 may include a high nickel-based positive electrode active material having a high content of nickel. The high nickel-based positive electrode active material may accomplish high capacity and high performance.

In embodiments, the second particle PTC2 may include a lithium nickel-based composite oxide having a layered structure, represented by Chemical Formula 2 below.

Chemical Formula 2 Liₐ₂Niₓ₂Co_{y2}Mn_{z2}X_{c2}O_{2-b2}

In Chemical Formula 2, 0.8≤a2≤1.2, 0.5≤x2≤0.8, 0≤y2≤0.3, 0.1≤z2≤0.5 0≤c2≤0.05, 0<b2≤0.05, and x2 + y2 + z2 + c2 = 1 is satisfied. X is at least one element selected from the group consisting of Al, Ti, Mg, Zr, Mo and Nb. X may be a dopant doped in the second particle PTC2.

The positive electrode active material according to some embodiments of the present disclosure will be explained in more detail with reference to FIG. 6 again. The positive electrode active material of the present disclosure includes first particles PTC1 and second particles PTC2. The mixing ratio of the first particles PTC1 and the second particles PTC2 in the positive electrode active material may be about 90:10 to about 50:50 or about 90:10 to about 60:40. In embodiments, the mixing ratio may be about 90:10 to about 70:30. The content of the first particles PTC1 is greater than or equal to the content of the second particles PTC2 in the positive electrode active material.

In an embodiment, the mixing ratio of the first particles PTC1 and the second particles PTC2 may be controlled so that the Mn content may be about 20% to about 50% in the total weight of metal elements excluding lithium in the positive electrode active material.

Because the first particle PTC1 includes Mn, the operating voltage of a rechargeable battery may be improved compared to the second particles PTC2. In the positive electrode active material according to embodiments, because the Mn content may be controlled to be about 20% to about 50% (e.g. about 20% to about 45%) by mixing the first particles PTC1 and the second particles PTC2 together in a suitable or appropriate ratio, an operating voltage may be improved compared to a lithium iron phosphate (LFP) battery.

In an embodiment, the mixing ratio of the first particles PTC1 and the second particles PTC2 may be controlled so that the Ni content may be about 5% to about 30% in the total weight of metal elements excluding lithium in the positive electrode active material.

Because the second particle PTC2 includes Ni, the energy density of a rechargeable battery may be improved compared to the first particles PTC1. In the positive electrode active material according to embodiments, because the Ni content is controlled to about 5% to about 30% (e.g. about 10% to about 20%) by mixing the first particles PTC1 and the second particles PTC2 together in a suitable or appropriate ratio, energy density may be improved compared to an LFP battery.

In an embodiment, the mixing ratio of the first particles PTC1 and the second particles PTC2 may be controlled so that a weight ratio of the weight of Ni to the weight of Mn (weight of Ni/weight of Mn) becomes about 0.125 to about 1.5 in the total weight of metal elements excluding lithium in the positive electrode active material. By mixing the first particles PTC1 and the second particles PTC2 together in a suitable or appropriate ratio, an operating voltage may be improved and energy density may be improved compared to an LFP battery.

Because the second particle PTC2 includes a nickel-based positive electrode active material, higher capacity may be accomplished compared to the first particle PTC1. In the positive electrode active material according to this embodiment, the first particles PTC1 and the second particles PTC2 are mixed together in a suitable or appropriate ratio, and capacity and an operating voltage may be improved compared to an LFP battery.

The above-described compound of Chemical Formula 2 (nickel-based positive electrode active material) may have lower electrical conductivity compared to the compound of Chemical Formula 1. In the present disclosure, the second particle PTC2 uses a single particle, and electrical conductivity and energy density may be improved.

The first particle PTC1 has features of having high stability and long lifetime. By using the structurally stable first particles PTC1 as the main material of the positive electrode active material, the relatively low stability and short lifetime of the second particles PTC2 may be compensated.

The positive electrode active material of the present disclosure may improve mixture density, capacity and energy density by mixing together the second particles PTC2 that are several micrometers in size and the base of the first particles PTC1 that may have a micrometer or nanometer size. In an embodiment, the pellet density of the positive electrode active material of the present disclosure may be about 2.0 g/cc to about 4.0 g/cc, or about 2.0 g/cc to about 3.0 g/cc. A rechargeable lithium battery including the positive electrode active material of the present disclosure may exhibit improved low-temperature properties.

Because the first particles PTC1 that are single particles have a very small average particle diameter, a large amount of a binder BND may be utilized to attach the first particles PTC1 to a current collector COL1 (see FIG. 1). Because the positive electrode active material of the present disclosure additionally includes the second particles PTC2 having a large average particle diameter as well as the first particles PTC1, the positive electrode active material layer AML1 may attach to the current collector COL1 smoothly. For example, the content of the binder BND in the positive electrode active material layer AML1 may be reduced due to the second particles PTC2. In some embodiments, the average particle diameter of the first particles is smaller than an average particle diameter of the plurality of single particles. In some embodiments, the average particle diameter of the first particles is smaller than an average particle diameter of the second particle.

A rechargeable lithium battery (see FIG. 1) including the positive electrode active material according to embodiments of the present disclosure may exhibit an average voltage of about 3.2 V to about 4.5 V during discharging about 0.1 C at between about 2.5 V and about 4.5 V. In embodiments, the charging peaks appearing at a voltage between about 3.4 V and about 4.0 V may be at least 2 or more in a differential capacity (dQ/dV)-voltage charging graph for the rechargeable lithium battery of the present disclosure. In embodiments, in a differential capacity (dQ/dV)-voltage charging graph for the rechargeable lithium battery of the present disclosure, if a peak at between about 3.4 V and about 3.6 V is defined as peak A, and a peak at between about 3.6 V and about 4.0 V is defined as peak B, the intensity of the peak A (IA) may be greater than the intensity of the peak B (IB).

In the graph, the ratio (IB/IA) of the intensity of peak A (IA) at between about 3.4 V and about 3.6 V to the intensity of peak B (IB) at between about 3.6 V to about 4.0 V may be about 0.001 to about 0.3, or about 0.005 to about 0.26.

### Method for Preparing Positive Electrode Active Material

A method for preparing the first particles PTC1 according to some embodiments of the present disclosure will be explained in more detail. A manganese iron phosphate precursor, a lithium source, a carbon source and a dopant source may be added to a solvent and mixed together. For example, the solvent may be water, ethanol and/or the like.

The manganese iron phosphate precursor may be a compound including manganese (Mn), iron (Fe) and phosphorus (P) simultaneously, a mixture of a compound including manganese (Mn) and a compound including iron (Fe) and phosphorus (P), or a mixture of a compound including manganese (Mn), a compound including iron (Fe) and a compound including phosphorus (P). For example, the manganese iron phosphate precursor may include MnₓFe₁₋ₓPO₄·H₂O, a mixture of MnCO₃ and FePO₄·H₂O, or a mixture of MnCO₃, FeSO₄, and H₃PO₄. Here x may be about 0.5 to about 0.9.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

The carbon source may include at least one selected from the group consisting of glucose, sucrose, fructose, cellulose, starch, citric acid, polyacrylic acid, polyethylene glycol, and dopamine.

The dopant source may include an oxide including a dopant metal and/or a chloride including a dopant metal. For example, the dopant source may include at least one selected from the group consisting of titanium oxide, magnesium oxide, vanadium oxide and niobium oxide.

The mixture may be subjected to wet grinding. The wet grinding may be performed using any suitable wet mill capable of controlling temperature. For example, the wet grinding may use at least one selected from the group consisting of a bead mill, ball mill, attrition mill, apex mill, super mill and basket mill. Through the wet grinding process, the particles in the mixture may be ground to a fine size.

In an embodiment of the present disclosure, the wet grinding may be omitted. In embodiments, in order to maximize the average particle diameter of the first particles PTC1 to be finally produced, the wet grinding with respect to precursor particles may be omitted.

A dried mixture may be formed by removing the solvent from the mixture. The formation of the dried mixture may include performing a direct evaporation method with respect to the mixture. For example, the direct evaporation method may include static drying and/or spray drying. In order to form the first particles PTC1 into single particles, the static drying may be used.

The dried mixture may be baked under an inert atmosphere. The inert atmosphere may be a nitrogen atmosphere and/or an argon atmosphere. The temperature of the baking process may be about 500 °C to about 1000 °C, or about 600 °C to about 800 °C. The performance time of the baking process may be about 4 hours to about 20 hours, or about 6 hours to about 12 hours. Through the baking of the dried mixture, first particles PTC1 including the compound of Chemical Formula 1 may be formed.

In the method for preparing the first particles PTC1 according to embodiments of the present disclosure, a carbon source may be introduced into an iron phosphate precursor to form uniform (e.g., substantially uniform) carbon coating layers on the surface of primary particles.

A dry grinding process may be performed for the baked first particles PTC1. As a result, the first particles PTC1 may have a single particle form. In embodiments, in the case of the above-described first particles PTC1, the dry grinding process may be omitted.

The method for preparing the second particles PTC2 according to embodiments of the present disclosure will be explained in more detail. A nickel-based precursor may be prepared. The nickel-based precursor may include Ni in the above-described Chemical Formula 2. The Ni content relative to the total metal content in the nickel-based precursor may be greater than about 50 at%. In an embodiment, the nickel-based precursor may further include Co and Mn.

In an embodiment, the nickel-based precursor may be obtained through a co-precipitation method. For example, the co-precipitation method may include dissolving a transition metal raw material in a solvent such as distilled water, and continuously (e.g., substantially continuously) adding a solution of a transition metal salt together with a chelating agent and an alkaline aqueous solution to a reactor to cause precipitation. After collecting the precipitate in a slurry type (e.g., in a slurry solution), the slurry solution may be filtered and dried to obtain a nickel-based precursor that is a metal composite oxide.

In the present disclosure, the transition metal raw material may include a metal salt of Ni. The transition metal raw material may further include at least one salt of a metal among Co and Mn. The metal salt may include a sulfate, a nitrate, an acetate, a halide, a hydroxide and/or the like, and any one may be used as long as it is dissolved in a solvent without limitation. The transition metal raw material according to embodiments may include a nickel salt, a cobalt salt and a manganese salt. The transition metal raw material may be blended by controlling the molar ratio so that the nickel-based precursor may have a Ni content of about 50 at% or more.

The nickel-based precursor and a lithium source may be mixed together in a set or certain ratio to form a mixture. For example, the nickel-based precursor and the lithium source may be mixed together in a molar ratio of about 1:1. The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

By removing the solvent from the mixture, a dried mixture may be formed. The dried mixture may be baked. The temperature of a baking process may be about 700 °C to about 1000 °C or about 900 °C to about 1000 °C. The baking process may be performed under an oxidizing atmosphere such as air and/or oxygen. The heating time of the baking process may be about 10 hours to about 30 hours. In another embodiment of the present disclosure, preliminary baking may be further performed at about 150 °C to about 800 °C prior to the baking process.

In an embodiment of the present disclosure, the baking process may be performed after additionally adding a melting agent to the mixture. The melting agent may be a compound including at least one metal selected from the group consisting of Zr, La, S and Nb. By using the melting agent, the second particle PTC2 may be smoothly formed into a single particle form. In embodiments, the average particle diameter of the second particles PTC2 may increase.

Through the baking process, second particles PTC2 may be formed from the mixture including the nickel-based precursor and the lithium source. A grinding process may be performed with respect to the synthesized second particles PTC2.

A coating process may be performed with respect to the ground second particles PTC2. In embodiments, the second particles PTC2 and a coating raw material may be added to a solvent and mixed together. For example, the coating raw material may include boron and/or aluminium. After filtering and drying the second particles PTC2, surface treatment may be performed on the second particles PTC2. The surface treatment may include a heating process under an oxidizing atmosphere such as air and/or oxygen. The surface treatment may be performed at a temperature of about 500 °C to about 800 °C.

In another embodiment of the present disclosure, the coating process may include a dry coating process. For example, the second particles PTC2 and the coating raw material may be put in a dry coating device and mixed together by stirring without a solvent. The surface treatment may be performed with respect to the dried mixture obtained.

By mixing the first particles PTC1 and the second particles PTC2 together, respectively prepared by the above-described methods, the positive electrode active material according to the present disclosure may be prepared. The first particles PTC1 and the second particles PTC2 may be mixed together in a weight ratio of about 90:10 to about 60:40, or about 90:10 to about 70:30, or about 80:20 to about 70:30.

Carbon element analysis according to embodiments of the present disclosure may be performed by an Elementar Micro Cube elemental analyzer. Example operation method and conditions are as follows. About 1-2 mg of a sample was weighed in a tin cup, put in an automatic sampling tray, brought into a combustion tube via a ball valve, and burned at a combustion temperature of about 1000 °C. After that, the burned gas was reduced using reducing copper to form carbon dioxide. The carbon dioxide was detected using a thermal conductivity detector (TCD).

In the method for measuring the carbon content according to embodiments of the present disclosure, scanning electron microscopy-energy dispersive X-ray spectroscopy (SEM-EDS) was performed with respect to the surface of the particles, and quantitative analysis was performed. As the method for measuring the carbon content, an inductively coupled plasma-mass spectrometry (ICP-MS), an inductively coupled plasma optical emission spectroscopy (ICP-OES) and/or the like may be used in addition to the SEM-EDS.

Hereinafter, the Examples will be described. However, the Examples are only illustrations of the present disclosure, and the present disclosure is not limited to the Examples below.

### Example 1: Preparation of First Particles in Single Particle Form

A manganese iron phosphate precursor that is a mixture of MnCO₃, FeSO₄ and H₃PO₄, lithium carbonate, and titanium dioxide in a molar ratio of about 1:1.03:0.01 was added to an aqueous mixture solution of 7 wt% of PEG and 8 wt% of glucose. A wet grinding process was performed by a ball milling with respect to the mixture. The mixture was evaporated and dried in a heating furnace tray, and put in a vacuum oven for drying at about 85 °C for about 4 hours. The dried mixture was baked under a nitrogen atmosphere at about 650 °C for about 10 hours. The baked product was ground to obtain first particles in a single particle form. The average diameter of the first particles was in the range of about 100 nm to about 2.5 µm (1.1 µm).

### Example 2: Preparation of Second Particles in Single Particle Form

A nickel-based precursor was prepared using a co-precipitation method. Particularly, nickel sulfate (NiSO₄·6H₂O), cobalt sulfate (CoSO₄·7H₂O) and manganese sulfate (MnSO₄·H₂O), as the raw materials of a nickel-based metal hydroxide, in a molar ratio of about 60:10:30 were dissolved in distilled water as a solvent to prepare a metal raw material mixture solution. The metal raw material mixture solution, ammonia water and sodium hydroxide were added to a reactor and reacted. A slurry solution in the reactor was filtered and washed with distilled water with high purity. The material thus washed was dried in a hot air oven at about 210 °C for about 24 hours to obtain a small particle precursor (Ni_{0.6}Co_{0.1}Mn_{0.3}(OH)₂) powder having an average particle diameter of about 3.5 µm.

The nickel-based precursor and anhydrous lithium hydroxide (LiOH) were dry mixed together using a Henschel mixer. The mixing was performed so that the molar ratio of lithium and a transition metal was about 1.04:1. The transition metal is the total sum of transition metals included in the nickel-based precursor (Ni + Co + Mn). A melting agent was additionally added to the mixture and heat treatment (e.g., baking process) was performed under an oxygen atmosphere at about 750 °C for about 15 hours to synthesize second particles as the nickel-based positive electrode active material. The second particles were ground using a Jet mill at a pressure of about 3 bars.

The second particles were added to distilled water and washed. Boron oxide and aluminium oxide corresponding to about 3 mol% on the basis of the total sum of the transition metals of the second particles were added to perform boron and aluminium coating. The second particles were dried at about 150 °C for about 12 hours and heated (e.g., surface treated) under an oxygen atmosphere at about 700 °C for about 15 hours.

### Example 3-1: Preparation of Mixture of First Particles and Second Particles

The first particles of Example 1 and the second particles of Example 2 were mixed together in a mass ratio of about 9:1 to prepare a positive electrode active material.

### Example 3-2: Preparation of Mixture of First Particles and Second Particles

The first particles of Example 1 and the second particles of Example 2 were mixed together in a mass ratio of about 8:2 to prepare a positive electrode active material.

### Example 3-3: Preparation of Mixture of First Particles and Second Particles

The first particles of Example 1 and the second particles of Example 2 were mixed together in a mass ratio of about 7:3 to prepare a positive electrode active material.

### Example 3-4: Preparation of Mixture of First Particles and Second Particles

The first particles of Example 1 and the second particles of Example 2 were mixed together in a mass ratio of about 6:4 to prepare a positive electrode active material.

### Example 3-5: Preparation of Mixture of First Particles and Second Particles

The first particles of Example 1 and the second particles of Example 2 were mixed together in a mass ratio of about 5:5 to prepare a positive electrode active material.

### Manufacture of Positive Electrode

95 wt% of a final positive electrode active material, 3 wt% of a polyvinylidene fluoride binder and 2 wt% of a carbon black conductive material were mixed in together an N-methylpyrrolidone solvent to prepare a positive electrode active material slurry. The positive electrode active material slurry was applied on an aluminium current collector, dried and rolled to manufacture a positive electrode.

### Manufacture of Negative Electrode

Graphite, a binder and a conductive material (an electrically conductive material) were mixed together in an N-methylpyrrolidone solvent to prepare a negative electrode active material slurry. The negative electrode active material slurry was applied on a copper current collector, dried and rolled to manufacture a negative electrode.

### Fabrication of Rechargeable Lithium Battery

A coin full cell was formed using the positive electrode and the negative electrode prepared. A polypropylene film (Celgard 3510) was used as a separator. As an electrolyte, an electrolyte solution obtained by mixing together 1.3 M LiPF₆ with a mixture solvent of ethylene carbonate (EC): diethyl carbonate (DEC): fluoroethylene carbonate (FEC) (2:6:2 by volume ratio) was used.

### Evaluation Example 1: Analysis on the Surface of Positive Electrode Active Material

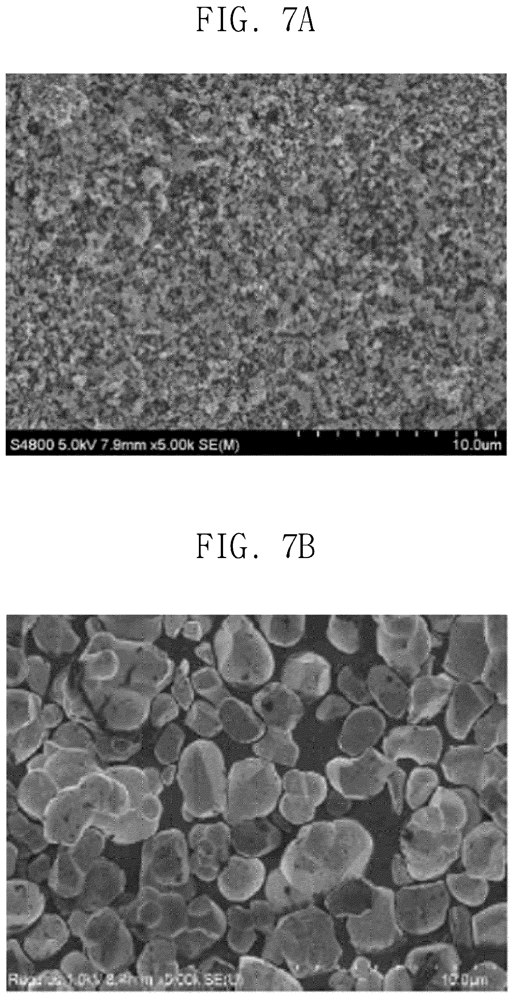

The scanning electron microscope (SEM) image of the first particles prepared in Example 1 is shown in FIG. 7A. The SEM image of the second particles prepared in Example 2 is shown in FIG. 7B. Referring to FIG. 7A, it can be seen that the first particles according to an embodiment of the present disclosure have a fine single particle form having a micrometer or nanometer size. Referring to FIG. 7B, it can be seen that the second particles according to an embodiment of the present disclosure have a single particle form having a micrometer size. It can be seen that each of the first particle and the second particle has one single crystal or a form in which a plurality of single particles are attached to each other.

### Evaluation Example 2: Evaluation of Active Material

The average particle diameters (D50) and average pellet density (PD) of the positive electrode active materials of Examples 1, 2, 3-1, 3-2, 3-3, 3-4 and 3-5 were measured, and the results are shown in Table 1. The pellet density may be measured and recorded within the range of 3.0000 g (with an error margin of ± 0.0004 g) for the positive electrode active material. The positive electrode active material may be pressed using a 13 mm KBr Pellet Die at 4 tons of pressure for 30 seconds, after which the height reduction may be measured and the weight per volume may be determined.

**Table 1**

| | D50 (µm) | PD (g/cc) |
|---|---|---|
| Example 1 | 1.1 | 2.26 |
| Example 2 | 3.5 | 3.14 |
| Example 3-1 | 1.3 | 2.49 |
| Example 3-2 | 1.6 | 2.61 |
| Example 3-3 | 1.8 | 2.7 |
| Example 3-4 | 2.1 | 2.75 |
| Example 3-5 | 2.2 | 2.82 |

Referring to Table 1, it can be seen that the average particle diameters (D50) of the positive electrode active materials according to Examples 3-1 to 3-5 of the present disclosure were increased compared to the positive electrode active material of Example 1. In addition, it can be seen that the average pellet density of the positive electrode active materials of Examples 3-1 to 3-5 was also increased compared to the positive electrode active material of Example 1.

### Evaluation Example 3: Evaluation of Battery Properties

The properties of the rechargeable lithium batteries fabricated using the positive electrode active materials of Examples 1, 2, 3-1, 3-2, 3-3, 3-4 and 3-5 were evaluated.

Rechargeable lithium batteries were initially charged under constant current (about 1 C) conditions, and after resting for about 10 minutes, discharged under constant current (about 1 C) conditions until about 2.5 V to carry out initial charging and discharging. Then, charging and discharging were repeated at about 45 °C at about 4.5 V-2.5 V with about 1 C/1 C for 50 times. While repeating the charging and discharging, average voltages and capacity at about 45 °C were measured, and capacity retention (%) at about 45 °C and capacity per volume (mAh/cc) were calculated by 50^{th} discharge capacity/ initial discharge capacity. The average voltage was obtained by integrating an area under a discharge voltage curve (a-voltage-capacity graph) after the initial charging and discharging of the cells and then dividing the integral by discharge capacity. On the other hand, charge and discharge capacities (mAh/g) per a weight were measured for the rechargeable lithium batteries using the positive active materials according to the Example or Comparative Examples, and multiplied by the pellet density (g/cc) to obtain a capacity per volume (mAh/cc) for the rechargeable lithium batteries according to the Example and Comparative Examples. The evaluation results on battery properties are shown in Table 2 below.

**Table 2**

| | Mixing ratio | | Charge voltage (V) | Discharge capacity (mAh/g) | 45 °C Capacity retention (%) | Capacity per volume (mAh/cc) |
|---|---|---|---|---|---|---|
| | First particles | Second particles | | | | |
| Example 1 | 100% | 0% | 4.5 | 150.1 | 96.4 | 339.2 |
| Example 2 | 0% | 100% | 4.5 | 209.1 | 97.2 | 656.6 |
| Example 3-1 | 90% | 10% | 4.5 | 150.7 | 97.0 | 375 |
| Example 3-2 | 80% | 20% | 4.5 | 157.3 | 97.1 | 411 |
| Example 3-3 | 70% | 30% | 4.5 | 162.1 | 97.2 | 437.7 |
| Example 3-4 | 60% | 40% | 4.5 | 166.6 | 96.7 | 458 |
| Example 3-5 | 50% | 50% | 4.5 | 171.5 | 96.7 | 484 |

Referring to Table 2, it can be seen that the rechargeable batteries according to Examples 3-1 to 3-4 exhibited rapid increase of capacity compared to the rechargeable battery according to Example 1.

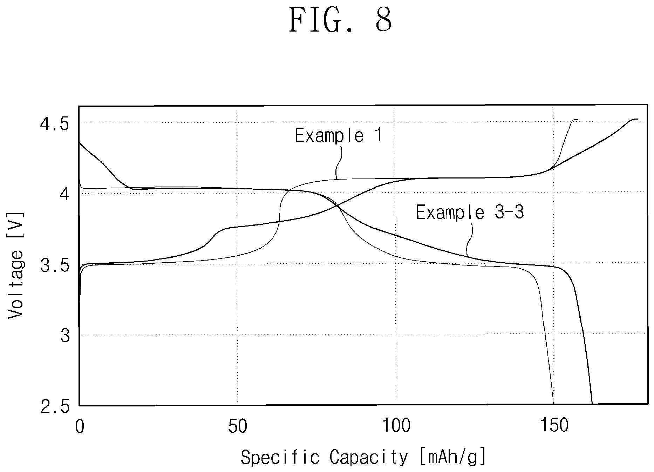

The voltage-capacity properties for the rechargeable batteries fabricated using the positive electrode active materials of Examples 1, 3-1 and 3-3 were measured and are shown in FIG. 8. Referring to FIG. 8, it can be seen that the rechargeable lithium batteries according to Examples 3-1 and 3-3 exhibited increased capacity compared to the rechargeable battery according to Example 1.

The differential capacity for the rechargeable lithium batteries fabricated using the positive electrode active materials of Examples 1, 2 and 3-3 was evaluated.

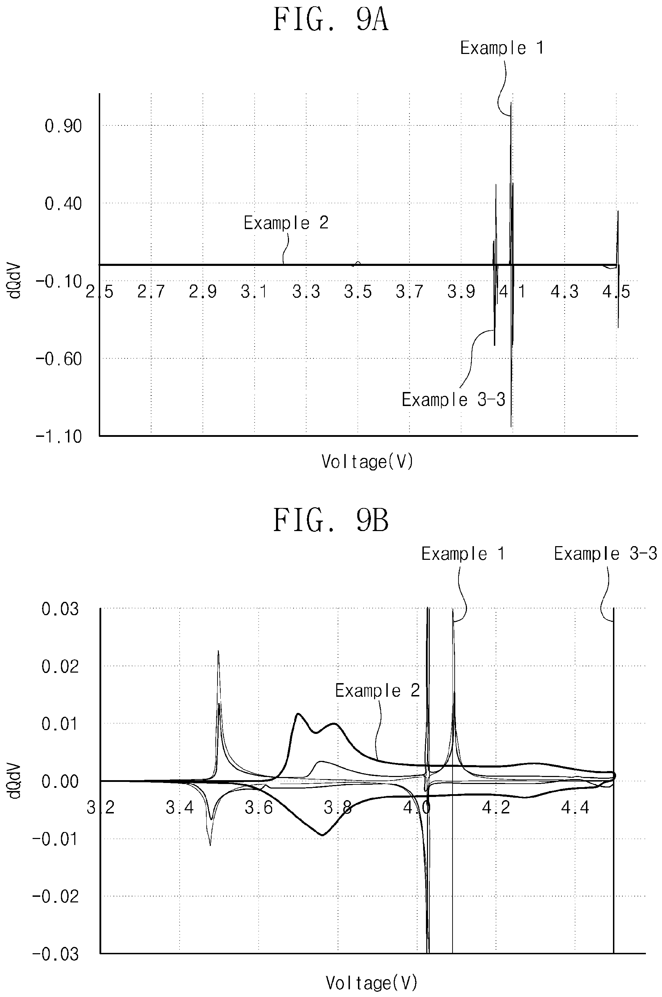

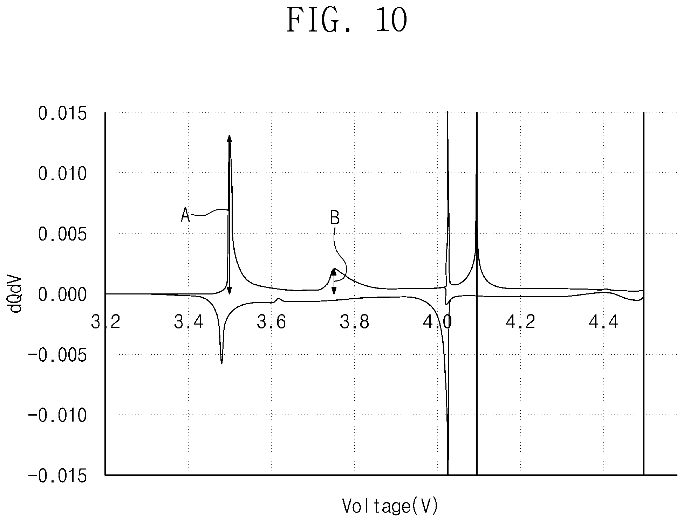

The rechargeable lithium batteries were charged and discharged at about 0.1 C for the first time and then charged and discharged for the second time by the same method. FIG. 9A is a graph measuring and showing a first differential capacity (dQ/dV)-voltage charging curve, FIG. 9B is a graph enlarging and showing only a portion of a voltage range of about 3.2 to about 4.5 V, and FIG. 10 is a graph showing only Example 3-3 in FIG. 9B.

Referring to FIG. 10, it can be seen that the charging peaks shown at a voltage between about 3.4 V to about 4.0 V for the rechargeable battery according to Example 3-3 are 2 or more. Only one peak was confirmed in the voltage range for the rechargeable battery according to Example 1.

Referring to FIG. 10, it can be seen that the rechargeable battery according to Example 3-3 showed the ratio (IB/IA) of the intensity of peak A (IA) at between about 3.4 V to about 3.6 V to the intensity of peak B (IB) at between about 3.6 V to about 4.0 V of about 0.26 or less.

In a positive electrode active material according to the present disclosure, an olivine-based first particle base having several hundred nanometers in size is mixed together with layered second particles having several micrometers in size, and the mixture density, capacity and energy density may be improved. A positive electrode active material layer according to embodiments of the present disclosure may be smoothly attached to a positive electrode current collector even with a relatively small amount of a binder. A rechargeable lithium battery according to embodiments of the present disclosure may have a relatively high average voltage.

Although embodiments of the present disclosure have been described, it is understood that the present disclosure should not be limited to these embodiments but various suitable changes and modifications can be made by one having ordinary skill in the art within the scope of the present disclosure as hereinafter claimed.

## Claims

1. A positive electrode active material, comprising:
first particles comprising a compound represented by the following Chemical Formula 1 and having a first average particle diameter; and
second particles comprising a compound represented by the following Chemical Formula 2 and having a second average particle diameter that is greater than the first average particle diameter,
wherein the content of the first particles is greater than or equal to the content of the second particles:
Chemical Formula 1 Liₐ₁Mnx₁Fe_{y1}Bz₁PO_{4-b1}
in Chemical Formula 1, 0.8≤a1≤1.2, 0.5≤x1≤0.7, 0.3≤y1≤0.5, 0<z1≤0.1, 0≤b1≤0.05, and x1 + y1 + z1 = 1, and
B is at least one element selected from the group consisting of Al, Ti, V, Mg and Nb,
Chemical Formula 2 Liₐ₂Niₓ₂Co_{y2}Mn_{z2}X_{c2}O_{2-b2}
in Chemical Formula 2, 0.8≤a2≤1.2, 0.5≤x2≤0.8, 0≤y2≤0.3, 0.1≤z2≤0.5 0≤c2≤0.05, 0<b2≤0.05, and x2 + y2 + z2 + c2 = 1, and
X is at least one element selected from the group consisting of Al, Ti, Mg, Zr, Mo and Nb.

2. The positive electrode active material as claimed in claim 1, wherein a mixing ratio of the first particles and the second particles is about 90:10 to about 60:40.

3. The positive electrode active material as claimed in claim 1 or claim 2,
wherein the second particle has a form in which a plurality of single particles are attached to each other, and
the average particle diameter of the first particles is smaller than an average particle diameter of the second particle.

4. The positive electrode active material as claimed in any one of claims 1 to 3,
wherein the first particle comprises a first coating layer comprising carbon, and
the carbon content in the first particle is about 1.5 wt% to about 2.5 wt%.

5. The positive electrode active material as claimed in any one of claims 1 to 4,
wherein the second particle comprises a second coating layer, and
the second coating layer comprises a boron-containing compound, an aluminium-containing compound or a combination thereof.

6. The positive electrode active material as claimed in any one of claims 1 to 5, wherein the average particle diameter of the first particles is about 100 nm to about 2.5 µm.

7. The positive electrode active material as claimed in any one of claims 1 to 6, wherein the second average particle diameter is about 2 µm to about 5 µm.

8. The positive electrode active material as claimed in any one of claims 1 to 7, wherein a pellet density of the positive electrode active material is about 2.0 g/cc to about 4.0 g/cc.

9. A positive electrode for a rechargeable lithium battery, the positive electrode comprising:
a positive electrode current collector; and
a positive electrode active material layer on the positive electrode current collector,
wherein the positive electrode active material layer comprises the positive electrode active material according to any one of claims 1 to 8, a conductive material and a binder.

10. The positive electrode for a rechargeable lithium battery as claimed in claim 9, wherein:
(i) the binder content is about 0.5 parts by weight to about 5 parts by weight on the basis of about 100 parts by weight of the positive electrode active material layer; and/or
(ii) the binder comprises at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon.

11. The positive electrode for a rechargeable lithium battery as claimed in claim 9 or claim 10, wherein:
(i) the content of the conductive material is about 0.5 parts by weight to about 5 parts by weight on the basis of about 100 parts by weight of the positive electrode active material layer; and/or
(ii) the conductive material comprises: a carbon-based material comprising natural graphite, artificial graphite, carbon black, acetylene black, Ketjen black, carbon fiber, carbon nano-fiber, and/or carbon nano-tube; a metal-based material comprising copper, nickel, aluminium and/or silver and/or having a metal powder and/or metal fiber form; a conductive polymer comprising a polyphenylene derivative; or a mixture thereof.

12. A rechargeable lithium battery, comprising:
the positive electrode according to any one of claims 9 to 11;
a negative electrode comprising a negative electrode current collector and a negative electrode active material layer on the negative electrode current collector; and
a separator between the positive electrode and the negative electrode.

13. The rechargeable lithium battery as claimed in claim 12, wherein charging peaks appearing at a voltage between about 3.4 V and about 4.0 V is at least 2 or more, in a differential capacity (dQ/dV)-voltage charging graph.

14. The rechargeable lithium battery as claimed in claim 12 or claim 13, having
peak A at between about 3.4 V and about 3.6 V, and
peak B at between about 3.6 V and about 4.0 V, in a differential capacity (dQ/dV)-voltage charging graph,
wherein an intensity of the peak A (IA) is greater than an intensity of the peak B (IB).

15. The rechargeable lithium battery as claimed in any one of claims 12 to 14, wherein a ratio (IB/IA) of an intensity of peak A (IA) at between about 3.4 V and about 3.6 V to an intensity of peak B (IB) at between about 3.6 V and about 4.0 V is about 0.005 to about 0.26, in a differential capacity (dQ/dV)-voltage charging graph.
